# EUROPEAN PATENT SPECIFICATION

(11) **EP 4 483 360 B1**
(45) Date of publication and mention of the grant of the patent: **03.12.2025**
(21) Application number: 23710642.2
(22) Date of filing: 15.02.2023
(51) Int. Cl.: G06N 3/045, G06N 3/0895, G10L 19/005, G10L 21/02

(54) **CODED SPEECH ENHANCEMENT BASED ON DEEP GENERATIVE MODEL**
VERBESSERUNG KODIERTER SPRACHE AUF DER BASIS EINES TIEFEN GENERATIVEN MODELLS
AMÉLIORATION DE LA PAROLE CODÉE BASÉE SUR UN MODÈLE GÉNÉRATIF PROFOND

(30) Priority: 23.02.2022 ES 202230148; 09.12.2022 US 202263431590 P
(43) Date of publication of application: 01.01.2025
(73) Proprietor: Dolby Laboratories Licensing Corporation, San Francisco, CA 94103 (US); Dolby International AB, Dublin, D02 VK60 (IE)
(72) Inventor: LI, Xu, San Francisco, California 94103 (US); LIU, Xiaoyu, San Francisco, California 94103 (US); PASCUAL, Santiago, San Francisco, California 94103 (US)
(74) Representative: Dolby International AB Patent Group Europe
(86) International application number: PCT/US2023/062682
(87) International publication number: WO 2023/164392

(56) References cited:
- WO-A1-2021/245015
- SANTIAGO PASCUAL ET AL: "Learning Problem-agnostic Speech Representations from Multiple Self-supervised Tasks", ARXIV.ORG, CORNELL UNIVERSITY LIBRARY, 201 OLIN LIBRARY CORNELL UNIVERSITY ITHACA, NY 14853, 6 April 2019 (2019-04-06), XP081165841
- ZEZARIO RYANDHIMAS E ET AL: "Self-Supervised Denoising Autoencoder with Linear Regression Decoder for Speech Enhancement", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 6669 - 6673, XP033793573, DOI: 10.1109/ICASSP40776.2020.9053925
- BISWAS ARIJIT ET AL: "Audio Codec Enhancement with Generative Adversarial Networks", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 356 - 360, XP033792769, DOI: 10.1109/ICASSP40776.2020.9053113
- YU-CHE WANG ET AL: "Self-supervised Learning for Speech Enhancement", ARXIV.ORG, CORNELL UNIVERSITY LIBRARY, 201 OLIN LIBRARY CORNELL UNIVERSITY ITHACA, NY 14853, 18 June 2020 (2020-06-18), XP081698418
- MIRCO RAVANELLI ET AL: "Multi-task self-supervised learning for Robust Speech Recognition", ARXIV.ORG, CORNELL UNIVERSITY LIBRARY, 201 OLIN LIBRARY CORNELL UNIVERSITY ITHACA, NY 14853, 25 January 2020 (2020-01-25), XP081585835

## Description

### CROSS REFERENCE TO RELATED APPLICATIONS

This application claims priority to Spanish Patent Application No. P202230148, filed 23 February 2022 and US provisional application 63/431,590, filed 09 December 2022.

### TECHNICAL FIELD

The present application relates to audio processing and machine learning.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Speech coding found its first major application in secure communication, and later enabled low-cost mobile and internet communication. With the continuously decreasing bitrate of speech codecs, decoded speech suffers from various quality issues. It would be helpful to address such quality issues.

R. E. Zezario, T. Hussain, X. Lu, H. -M. Wang and Y. Tsao, "Self-Supervised Denoising Autoencoder with Linear Regression Decoder for Speech Enhancement" relates to an unsupervised learning approach for speech enhancement, i.e., denoising autoencoder with linear regression decoder (DAELD) model for speech enhancement. The DAELD is trained with noisy speech as both input and target output in a self-supervised manner. In addition, with properly setting a shrinkage threshold for internal hidden representations, noise could be removed during the reconstruction from the hidden representations via the linear regression decoder.

### SUMMARY

The application claims a computer-implemented method of restoring clean speech from coded audio data according to claim 1.

Techniques described in this specification can be advantageous over conventional audio processing techniques. For example, the method enables the generation of improved speech data from real-life coded audio data containing speech that is often contaminated. The generation is conditioned on robust features obtained from self-supervised learning of speech properties at various levels, from low-level raw audio properties to high-level speaker-related properties, which helps achieve a high quality in the improved speech data despite the distortion and coding. The improved speech data is improved with efficiency using relatively compact deep learning models that may run in real time as raw speech signals are generated. The improved speech data leads to better perception of the audio and better user enjoyment of the audio.

### BRIEF DESCRIPTION OF THE DRAWINGS

The example embodiment(s) of the present invention are illustrated by way of example, and not in way by limitation, in the figures of the accompanying drawings and in which like reference numerals refer to similar elements and in which:
FIG. 1 illustrates an example networked computer system in which various embodiments may be practiced.
FIG. 2 illustrates example components of an audio management computer system in accordance with the disclosed embodiments.
FIG. 3 illustrates the processes of training a feature extraction model and training a speech enhancement model.
FIG. 4 illustrates an example process performed by an audio management computer system in accordance with some embodiments described herein.
FIG. 5 is a block diagram that illustrates a computer system upon which an embodiment of the invention may be implemented.

### DESCRIPTION OF THE EXAMPLE EMBODIMENTS

In the following description, for the purposes of explanation, numerous specific details are set forth in order to provide a thorough understanding of the example embodiment(s) the present invention. It will be apparent, however, that the example embodiment(s) may be practiced without these specific details. In other instances, well-known structures and devices are shown in block diagram form in order to avoid unnecessarily obscuring the example embodiment(s).

Embodiments are described in sections below according to the following outline:
1. GENERAL OVERVIEW
2. EXAMPLE COMPUTING ENVIRONMENTS
3. EXAMPLE COMPUTER COMPONENTS
4. FUNCTIONAL DESCRIPTIONS
4.1. TRAINING FEATURE EXTRACTION MODEL
4.1.1. DATA DISTORTION
4.1.2. DATA DOWN-SAMPLING
4.1.3. FEATURE EXTRACTION MODEL
4.2. TRAINING SPEECH ENHANCEMENT MODEL
4.2.1. DATA COLLECTION
4.2.2. SPEECH ENHANCEMENT MODEL
4.3. EXECUTING DEEP LEARNING MODELS
5. EXAMPLE PROCESSES
6. HARDWARE IMPLEMENTATION
7. EXTENSIONS AND ALTERNATIVES
   **

### 1. GENERAL OVERVIEW

A system for generating enhanced speech data using robust audio features is disclosed. In some embodiments, a system is programmed to use a self-supervised deep learning model to generate a set of feature vectors from given audio data that contains contaminated speech and is coded. The system is further programmed to use a generative deep learning model to create improved audio data corresponding to clean speech from the set of feature vectors.

In some embodiments, the system is programmed to train the self-supervised deep learning model. The training includes using specific audio features of clean speech signals to compute the weights of an encoder that is configured to generate a set of feature vectors from contaminated, coded speech signals. The audio features can include low-level audio features, such as energy or pitch, or high-level audio features, such as speaker accent. A speech signal refers to a digitalized audio waveform that includes speech. The digitalization results in one or more frames, each frame including one or more samples corresponding to a particular sampling rate. The distortion can come from extra speech or non-speech audio in the environment, such as noise or reverberation, or limitations of the recording equipment, such as clipping, for example. The coding can result from application of a compression algorithm with a target bitrate. The trained self-supervised deep learning model is expected to generated a set of robust feature vectors, for each frame of a contaminated, coded speech signal, that characterize a frame of the corresponding clean speech signal.

In some embodiments, while the clean speech signals are of a certain sampling rate, the system is programmed to down-sample coded speech signals, which can be derived from the clean speech signals, to form the training dataset for the self-supervised deep learning model. For example, speech signals of a sampling rate of 48 kHz can be down-sampled to speech signals of a sampling rate of 16 kHz. The down-sampled speech signals are expected to still capture main audio features that can be used to restore 48 kHz clean signals.

In some embodiments, the system is programmed to then train the generative deep learning model. The training includes using clean speech signals to compute the weights of a recurrent neural network that is configured to generate improved speech signals from sets of feature vectors, which are generated by the self-supervised deep learning model from contaminated, coded speech signals. The trained generative deep learning model is expected to generate improved speech signals of a predetermined sampling rate, such as 48 kHz, even if the sets of feature vectors are generated from speech signals of a lower sampling rate, such as 16 kHz.

In some embodiments, given a new speech signal that has been coded using any coding algorithm for any bitrate, the system is configured to execute the trained self-supervised deep learning model on the new speech signal to generate a set of feature vectors. The system is configured to further execute the trained generative deep learning model on the set of feature vectors to generate an improved speech signal that corresponds to decoded, clean speech signal.

The system produces technical benefits. With the continuously decreasing bitrate of speech codecs, decoded speech suffers more from lost bandwidths, spectral holes, or other quality issues. The system addresses the technical problem of unpredictable quality of decoded speech signals that result from lowering bitrates of the coding process. The system enables the generation of improved speech data from real-life coded audio data containing speech that is often contaminated. The generation is conditioned on robust features obtained from self-supervised learning of speech properties at various levels, from low-level raw audio properties to high-level speaker-related properties, which helps achieve a high quality in the improved speech data despite the distortion and coding. The improved speech data is improved with efficiency using relatively compact deep learning models that may run in real time as raw speech signals are generated. The improved speech data leads to better perception of the audio and better user enjoyment of the audio.

### 2. EXAMPLE COMPUTING ENVIRONMENTS

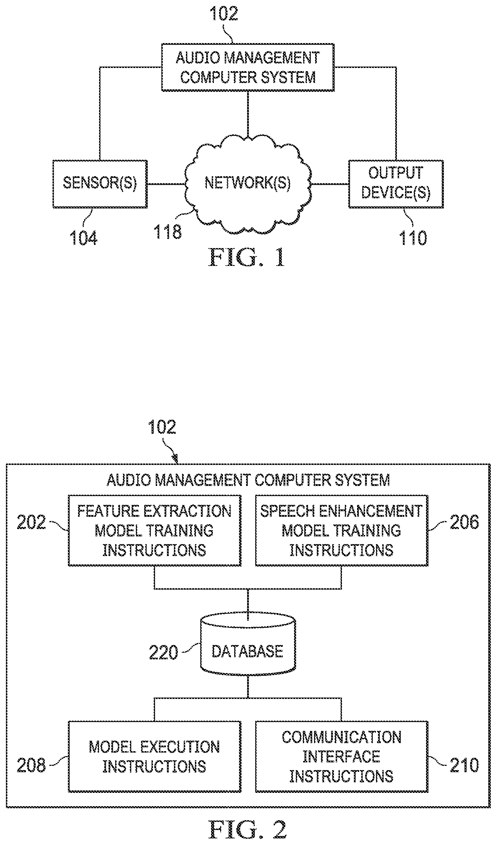

FIG. 1 illustrates an example networked computer system in which various embodiments may be practiced. FIG. 1 is shown in simplified, schematic format for purposes of illustrating a clear example and other embodiments may include more, fewer, or different elements.

In some embodiments, the networked computer system comprises an audio management server computer 102 ("server"), one or more sensors 104 or input devices, and one or more output devices 110, which are communicatively coupled through direct physical connections or via one or more networks 118.

In some embodiments, the server 102 broadly represents one or more computers, virtual computing instances, and/or instances of an application that is programmed or configured with data structures and/or database records that are arranged to host or execute functions related to restoring clean speech signals from contaminated, coded speech signals. The server 102 can comprise a server farm, a cloud computing platform, a parallel computer, or any other computing facility with sufficient computing power in data processing, data storage, and network communication for the above-described functions.

In some embodiments, each of the one or more sensors 104 can include a microphone or another digital recording device that converts sounds into electric signals. Each sensor is configured to transmit raw or processed audio data to the server 102. Each sensor may include a processor or may be integrated into a typical client device, such as a desktop computer, laptop computer, tablet computer, smartphone, or wearable device, where a processor coupled with the sensor can perform initial processing of the audio data.

In some embodiments, each of the one or more output devices 110 can include a speaker or another digital playing device that converts electrical signals back to sounds. Each output device is programmed to play audio data received from the server 102. Similar to a sensor, an output device may include a processor or may be integrated into a typical client device, such as a desktop computer, laptop computer, tablet computer, smartphone, or wearable device, where a processor coupled with the sensor can perform subsequent processing of the audio data.

The one or more networks 118 may be implemented by any medium or mechanism that provides for the exchange of data between the various elements of FIG. 1. Examples of the networks 118 include, without limitation, one or more of a cellular network, communicatively coupled with a data connection to the computing devices over a cellular antenna, a near-field communication (NFC) network, a Local Area Network (LAN), a Wide Area Network (WAN), the Internet, a terrestrial or satellite link, etc.

In some embodiments, the server 102 is programmed to receive input audio data corresponding to sounds in a given environment from the one or more sensors 104. The input audio data may comprise a plurality of frames over time. The sever 102 is programmed to next process the input audio data, which is coded and typically has a mixture of speech and noise, to generate improved audio data that corresponds to clean speech. The server can also be programmed to send the output audio data to the one or more output devices.

### 3. EXAMPLE COMPUTER COMPONENTS

FIG. 2 illustrates example components of an audio management computer system in accordance with the disclosed embodiments. The figure is for illustration purposes only and the server 102 can comprise fewer or more functional or storage components. Each of the functional components can be implemented as software components, general or specific-purpose hardware components, firmware components, or any combination thereof. Each of the functional components can also be coupled with one or more storage components (not shown). A storage component can be implemented using any of relational databases, object databases, flat file systems, or Javascript Object Notation (JSON) stores. A storage component can be connected to the functional components locally or through the networks using programmatic calls, remote procedure call (RPC) facilities or a messaging bus. A component may or may not be self-contained. Depending upon implementation-specific or other considerations, the components may be centralized or distributed functionally or physically.

In some embodiments, the server 102 comprises feature extraction model training instructions 202, speech enhancement model training instructions 206, model execution instructions 208, and communication interface instructions 210. The server 102 also comprises a database 220.

In some embodiments, the feature extraction model training instructions 202 enable training deep learning models for extracting audio features corresponding to clean speech signals from coded, contaminated speech signals. The deep learning models include various neural networks or other self-supervised models that can learn features from clean speech signals.

In some embodiments, the speech enhancement model training instructions 206 enable training deep learning models for generating improved speech signals from sets of audio features generated by the feature extraction model. The deep learning models include various neural networks or other generative models that can generate improved speech signals from audio features corresponding to clean speech signals.

In some embodiments, the model execution instructions 208 enable executing deep learning models for generating improved speech data from contaminated, coded speech data. The execution can include executing the feature extraction model on coded audio data containing a mixture of speech and non-speech to generate a set of feature vectors. The execution can further include executing the speech enhancement model on the set of feature vectors to generate improved audio data that corresponds to clean speech.

In some embodiments, the communication interface instructions 210 enable communication with other systems or devices through computer networks. The communication can include receiving audio data or trained deep learning models from audio sources or other systems. The communication can also include transmitting enhanced speech data to other processing devices or output devices.

In some embodiments, the database 220 is programmed or configured to manage storage of and access to relevant data, such as audio data, including clean speech signals, contaminated speech signals, coded speech signals, or down-sampled speech signals, digital models, features extracted from the audio data, or results of executing the digital models.

### 4. FUNCTIONAL DESCRIPTIONS

Speech signals, namely digital audio data containing speech and typically represented as waveforms in the time domain, encompass a rich set of acoustic and linguistic properties, ranging from individual lexical units, such as phonemes or words, to speaker characteristics, such as their intent or emotional status. However, such properties of speech are poorly captured by low-level, signal-processing features, such as amplitudes of a wave signal, log Mel spectrograms, or Mel frequency cepstral coefficients (MFCCs). Coded speech is already missing information. Restoring original speech using only low-level, signal-processing features extracted from the coded speech, which do not fully characterize the speech signals, could be especially difficult.

In some embodiments, the server therefore identifies properties or extract features from coded speech using a feature extraction model, which is a self-supervised deep learning model. The extracted features are then used to build a speech enhancement model, which is a generative deep learning model.

### 4.1. TRAINING FEATURE EXTRACTION MODEL

### 4.1.1. DATA DISTORTION

Speech signals are generally distorted by various contaminations caused by the environment or the recording apparatus, such as reverberation, additive noise, overlapping speech, temporal or frequency masking, or clipping. Speech encoding introduces yet another level of distortion.

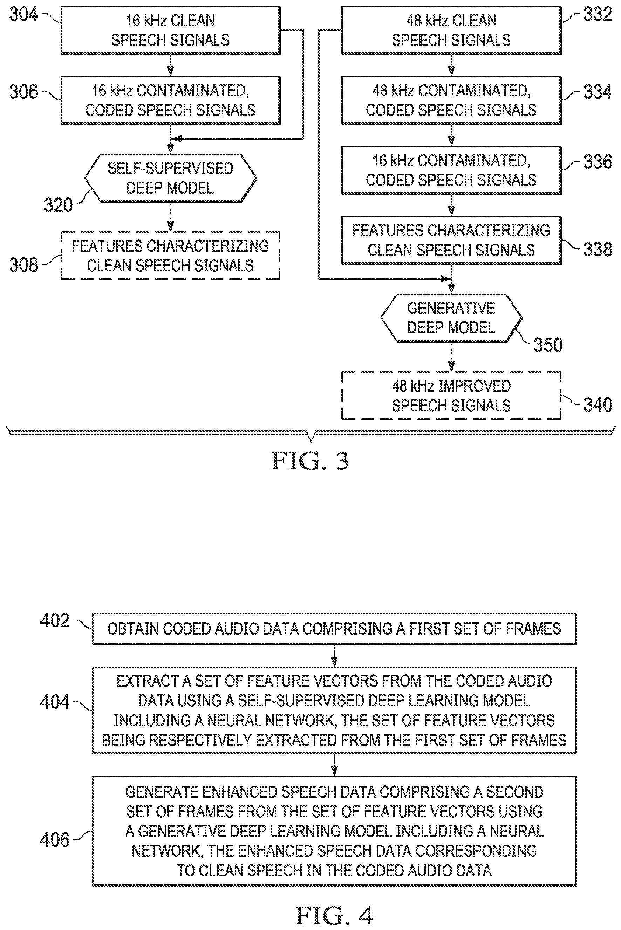

FIG. 3 illustrates the processes of training a feature extraction model and training a speech enhancement model. In some embodiments, the server 102 expects a feature extraction model that is robust against speech distortion. Therefore, the server 102 prepares a first dataset of speech signals, such as 306, that are distorted to various extents for the feature extraction model. The speech signals in the first dataset can include contaminations affecting different durations or frequency bands. An example approach of introducing such contaminations to clean speech signals, such as 304, can be found in the paper on the improved version of a problem-agnostic speech encoder (PASE+) titled "Multi-task self-supervised learning for Robust Speech Recognition" by Ravanelli et al. The speech signals in the first dataset can also be subject to different codecs, such as linear predictive coding (LPC) or modified discrete cosine transform (MDCT), with different bitrates, such as bitrates between 32 kbps and 256 kbps. For training purposes, the Advanced Audio Coding (AAC) codec with different bitrates could be used to process the speech signals. The bitrates can be from 16 kbps to 64 kbps.

### 4.1.2. DATA DOWN-SAMPLING

A sampling rate of 48 kHz for digital speech is common in today's multimedia communication. Based on a reasonable assumption that acoustic and linguistic content, such as phoneme or pitch, mainly resides in a low-frequency region, a lower sampling rate can be used for training the feature extraction model. Using a lower sampling rate can reduce the amount of data needed and also increase the ease of finding needed data. The assumption further includes that the low-frequency region generally lies below 8 kHz.

Therefore, in some embodiments, the server 102 chooses as the lower sampling rate one that is between 8 kHz and 48 kHz, such as 16 kHz. The server 102 then includes 16 kHz speech signals in the first dataset and uses the first dataset as a first training set. Alternatively, the server 102 down-samples 48 kHz speech signals in the first dataset to obtain a first training set of the lower sampling rate that is much bigger than the first dataset. While the feature extraction model is built mainly from training data of the lower sampling rate, the feature extraction model is expected to work with and thus is used for extracting features from actual data of the original, higher sampling rate, as further discussed below. Experiments show that a feature extraction model built from the first training set of a sampling rate of 16 kHz is capable of restoring 48 kHz clean speech signals with high quality.

### 4.1.3. FEATURE EXTRACTION MODEL

In some embodiments, the server 102 builds a feature extraction model, such as 320, from the first training set. The server 102 can build a PASE+ model, as described in the paper by Ravanelli et al. PASE+ uses a self-supervised learning approach to extract speech information at various levels, such as phonemes or speaker emotions. PASE+ is a deep neural network that takes as input a distorted speech signal as a waveform and generates as output a set of high-dimensional feature vectors, which is expected to characterize a corresponding clean speech signal, where each feature is for one frame of the distorted speech signal. For example, each frame may be 10 ms long with 480 samples for a sampling rate of 48 kHz. Therefore, the server 102 uses each distorted speech signal in the first training set for building the PASE+ model with the goal to generate a set of feature vectors, such as 308, that characterizes corresponding clean speech without distortions.

Specifically, PASE+ comprises an encoder (including a quasi-recurrent neural network to learn long-term dependencies across time steps) that extracts a group of features as a feature vector from a frame of a distorted speech signal. PASE+ also comprises a number of workers. Each worker is a small feed-forward neural network that accomplishes a self-supervised signal-transformation task corresponding to a known speech property. For example, when the signal transformation task corresponds to the MFCC, the worker constructs the "target" MFCC values from a clean speech signal corresponding to the distorted speech signal (thus the flow from 304 to 320, for example) and determines the loss of the current feature vector from the target MFCC values. The signal-transformation task is considered self-supervised rather than supervised in that while no classification or label of the ground truth (e.g., the clean speech signal) is separately given, properties of the ground truth can be and are automatically computed from the ground truth. The total loss of the current feature vector is computed based on the losses determined by all the workers.

Experimental results show that distortions introduced into clean speech signals tend to augment the training data with more variety and further force denoising the training data to learn distortion-invariant, robust features. Using the first training set of distorted signals, the workers are trained with the encoder to determine the weights for the encoder. Given an actual speech signal, only the trained encoder needs to be executed to obtain a corresponding group of robust features, as further discussed in Section 4.3.

In some embodiments, the workers' tasks can be related to signal processing features, such as filter banks, prosody (interpolated logarithm of the fundamental frequency, voiced/unvoiced probability, zero-crossing rate, and energy), log Mel spectrograms, or MFCCs, or sampling strategies used to capture speaker characteristics, such as local info max or global info max, as also discussed in the paper by Ravanelli et al. In this manner, PASE+ provides a deep and compact representation of various levels of speech abstraction, from low-level spectral information to high-level speaker information.

In some embodiments, the server 102 builds an alternative feature extraction model instead of the PASE+ model. To utilize the first training set, the alternative feature extraction model would also adopt a self-supervised or unsupervised learning approach to extract speech information at various levels. An example of the alternative feature extraction model is contrastive predictive coding (CPC), which uses a contrastive loss function that relies on encodings of positive samples.

### 4.2. TRAINING SPEECH ENHANCEMENT MODEL

### 4.2.1. DATA COLLECTION

In some embodiments, the server 102 starts with a sampling rate common in today's multimedia communication. The server 102 prepares a second dataset of speech signals, such as 334, that are contaminated to various extents for a speech enhancement model. The speech signals in the second dataset can also be subject to different codecs with different bitrates. The server 102 then down-samples the speech signals in the second dataset to obtain a down-sampled dataset of a lower sampling rate, such as 16 kHz. Next, the server runs the down-sampled dataset through the trained feature extraction model, and obtains a second training set of sets of feature vectors, such as 338, for the speech enhancement model.

### 4.2.2. SPEECH ENHANCEMENT MODEL

In some embodiments, the server 102 builds a speech enhancement model, such as 350, from the second training set. The server 102 can build a WaveRNN model, as described in the paper titled "Efficient Neural Audio Synthesis" by Kalchbrenner et al. WaveRNN uses a sequential process to generate high-quality samples efficiently. WaveRNN is a deep neural network that takes as input a set of feature vectors, one for each frame of the original speech signal, which is expected to characterize a corresponding clean speech signal, and generates as output a corresponding improved speech signal, which is expected to correspond to the clean speech signal. Therefore, the server 102 can use sets of feature vectors generated from distorted speech signals by the feature extraction model for building the WaveRNN model with the goal to obtain, for each distorted speech signal, an improved speech signal that is free from any distortions present in the distorted speech signal, such as 340.

Specifically, WaveRNN includes a conditional network and a recurrent network. The conditional network consists of a pair of convolutional networks: a residual network and an upsampling network that work in parallel. The residual network with growing dilations through blocks of learned transforms can map a set of feature vectors to a latent representation, which is then split into multiple parts that are used as input to the subsequent recurrent network. At the same time, the set of feature vectors goes through the upsampling network to generate a second set of feature vectors that match the temporal size of the original speech signal. The outputs of these two convolutional networks are concatenated to form a set of output feature vectors, which is then fed into the recurrent network.

The recurrent network, which contains fully connected (FC) layers, unidirectional gated recurrent units (GRU), and a softmax function, generates the improved speech signal one sample at a time. As each output feature vector generally corresponds to a frame of multiple samples, the same output feature vector is used in generating the corresponding samples in the improved speech signal. For each current sample of the improved speech signal, the output feature vector and the previous samples already generated are concatenated before going through blocks of learned transforms ending with the softmax activation to compute the probability of each possible value for the current sample, which is then used to calculate the cross-entropy loss of the clean speech samples.

As discussed in the previous section, while the sets of feature vectors can be generated from distorted speech signals, the sets of feature vectors are expected to characterize the clean speech signals. In some embodiments, to increase the accuracy of the resulting WaveRNN model, for each current sample of the improved speech signal, the output feature vector and the previous samples of the known clean speech signal corresponding to the previous samples of the improved speech signal are concatenated instead (thus the flow from 332 to 350, for example) before going through the blocks of learned transforms ending with the softmax activation to compute the probability of each possible value for current sample. The probability is then used to calculate the cross-entropy loss of the clean speech samples and update the model parameter values.

In some embodiments, the original speech signal is of a sampling rate of 48 kHz, the set of feature vectors are generated by the feature extraction model from down-sampled data of a sampling rate of 16 kHz, and the speech enhancement network generates the improved speech signal that is again of a sampling rate of 48 kHz.

In some embodiments, the server 102 builds an alternative speech enhancement model instead of the WaveRNN model. To utilize the second training set, the alternative speech enhancement model would also be a generative model to restore the clean speech signal. Examples of the alternative speech enhancement model include LPCNet, WaveNet, or SampleRNN.

In some embodiments, instead of training the feature extraction model and the speech enhancement model separately, the server 102 trains the two models together. Then, instead of potentially using separate datasets, such as 306 and 336, to train the two models, the output 308 of the feature extraction model 320 could flow directly into the generative deep model 350 during training, and parameters of both models can be tuned during the same training process. In this manner, the extracted features can be further refined to better adapt themselves to the application of interest, which in this case is restoring clean speech signals.

### 4.3. EXECUTING DEEP LEARNING MODELS

In some embodiments, given a new contaminated, coded speech signal, the server 102 generates a set of feature vectors using the PASE+ model. When the new speech signal is of a sampling rate common in today's multimedia communication, such as 48 kHz, the server 102 down-samples the new speech signal to the lower sampling rate, such as 16 kHz, used to train the feature extraction model before executing the feature extraction model. From the set of feature vectors, the server 102 then generates an improved signal using the WaveRNN model. In this case, the samples being used in generating the current sample of the improved speech signal would be the previous samples generated for the improved speech signal. The generation process is autoregressive by randomly sampling from a predicted distribution of the current sample based on the previously generated samples.

In some embodiments, the PASE+ model can be replaced by an alternative feature extraction model, or the WaveRNN model can be replaced by an alternative speech enhancement model in generating the improved speech signal for the given new contaminated, coded speech signal, as discussed above.

In some embodiments, the server 102 sends the improved speech signal to an output device, such as an audio player or another computing device on which the improved speech signal can be further processed.

### 5. EXAMPLE PROCESSES

FIG. 4 illustrates an example process performed by an audio management computer system in accordance with some embodiments described herein. FIG. 4 is shown in simplified, schematic format for purposes of illustrating a clear example and other embodiments may include more, fewer, or different elements connected in various manners. FIG. 4 is each intended to disclose an algorithm, plan or outline that can be used to implement one or more computer programs or other software elements which when executed cause performing the functional improvements and technical advances that are described herein. Furthermore, the flow diagrams herein are described at the same level of detail that persons of ordinary skill in the art ordinarily use to communicate with one another about algorithms, plans, or specifications forming a basis of software programs that they plan to code or implement using their accumulated skill and knowledge.

In step 402, the server 102 is programmed to obtain coded audio data comprising a first set of frames.

In some embodiments, the server 102 is programmed to receive original coded data and down-sample the original coded data to obtain the coded audio data. The original coded data can correspond to a sampling rate of 48 kHz, and the coded audio data can correspond to a sampling rate of 16 kHz. The coded audio data can contain noise or reverbs.

In step 404, the server 102 is programmed to extract a set of feature vectors from the coded audio data using a self-supervised deep learning model including a neural network, the set of feature vectors being respectively extracted from the first set of frames.

In some embodiments, the self-supervised deep learning model includes an encoder and a plurality of workers. Each worker of the plurality of workers performs a self-supervised task related to a distinct speech property. One worker of the plurality of workers can perform the self-supervised task related to a pre-defined sampling strategy that draws anchor, positive, and negative samples from a pool of representations generated by the encoder.

In step 406, the server 102 is programmed to generate enhanced speech data comprising a second set of frames from the set of feature vectors using a generative deep learning model including a neural network, the enhanced speech data corresponding to clean speech in the coded audio data.

In some embodiments, the generative deep learning model includes a conditional network and a recurrent network. The conditional network converts the set of feature vectors into a set of output feature vectors by considering multiple frames each time. The recurrent network generates the enhanced speech data from the set of output feature vectors one sample at a time, where each frame of the second set of frames comprises a plurality of samples. The recurrent network can generate a new sample of each frame the enhanced speech data using a corresponding feature vector of the set of feature vectors and samples of the enhanced speech data generated previously.

In some embodiments, the server 102 is programmed to obtain a training set of distorted, down-sampled speech signals relative to a predetermined sampling rate. The server is further configured to build the self-supervised deep learning model using the training set of distorted, down-sampled speech signals.

In some embodiments, the server 102 is programmed to obtain a second dataset of clean speech signals of the predetermined sampling rate corresponding to the coded, down-sampled speech signals. The server is configured to also distort a copy of the second dataset with one or more artifacts caused by a recording environment, a recording equipment, or a coding algorithm, to obtain the first training set. The server is further configured to build the self-supervised deep learning model using also the second dataset.

In some embodiments, the server 102 is programmed to obtain a dataset of coded, down-sampled speech signals relative to a predetermined sampling rate. The server 102 is further configured to generate a training set of sets of feature vectors from the dataset using the self-supervised deep learning model. In addition, the server 102 is configured to build the generative deep learning model using the training set of sets of feature vectors.

In some embodiments, the server 102 is programmed to obtain a third dataset of clean speech signals of the predetermined sampling rate corresponding to the coded, down-sampled speech signals. The server 102 is further configured to build the generative deep learning model also using the third dataset.

In some embodiments, the server 102 is programmed to obtain a dataset of distorted, down-sampled speech signals relative to a predetermined sampling rate and train a combined model comprising the self-supervised deep learning model connected with the generative deep learning model using the dataset.

### 6. HARDWARE IMPLEMENTATION

According to one embodiment, the techniques described herein are implemented by at least one computing device. The techniques may be implemented in whole or in part using a combination of at least one server computer and/or other computing devices that are coupled using a network, such as a packet data network. The computing devices may be hard-wired to perform the techniques, or may include digital electronic devices such as at least one application-specific integrated circuit (ASIC) or field programmable gate array (FPGA) that is persistently programmed to perform the techniques, or may include at least one general purpose hardware processor programmed to perform the techniques pursuant to program instructions in firmware, memory, other storage, or a combination. Such computing devices may also combine custom hard-wired logic, ASICs, or FPGAs with custom programming to accomplish the described techniques. The computing devices may be server computers, workstations, personal computers, portable computer systems, handheld devices, mobile computing devices, wearable devices, body mounted or implantable devices, smartphones, smart appliances, internetworking devices, autonomous or semi-autonomous devices such as robots or unmanned ground or aerial vehicles, any other electronic device that incorporates hard-wired and/or program logic to implement the described techniques, one or more virtual computing machines or instances in a data center, and/or a network of server computers and/or personal computers.

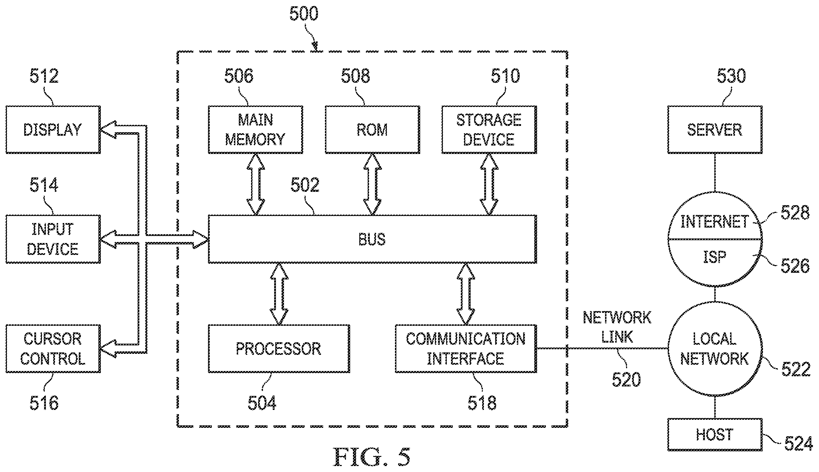

FIG. 5 is a block diagram that illustrates an example computer system with which an embodiment may be implemented. In the example of FIG. 5, a computer system 500 and instructions for implementing the disclosed technologies in hardware, software, or a combination of hardware and software, are represented schematically, for example as boxes and circles, at the same level of detail that is commonly used by persons of ordinary skill in the art to which this disclosure pertains for communicating about computer architecture and computer systems implementations.

Computer system 500 includes an input/output (I/O) subsystem 502 which may include a bus and/or other communication mechanism(s) for communicating information and/or instructions between the components of the computer system 500 over electronic signal paths. The I/O subsystem 502 may include an I/O controller, a memory controller and at least one I/O port. The electronic signal paths are represented schematically in the drawings, for example as lines, unidirectional arrows, or bidirectional arrows.

At least one hardware processor 504 is coupled to I/O subsystem 502 for processing information and instructions. Hardware processor 504 may include, for example, a general-purpose microprocessor or microcontroller and/or a special-purpose microprocessor such as an embedded system or a graphics processing unit (GPU) or a digital signal processor or ARM processor. Processor 504 may comprise an integrated arithmetic logic unit (ALU) or may be coupled to a separate ALU.

Computer system 500 includes one or more units of memory 506, such as a main memory, which is coupled to I/O subsystem 502 for electronically digitally storing data and instructions to be executed by processor 504. Memory 506 may include volatile memory such as various forms of random-access memory (RAM) or other dynamic storage device. Memory 506 also may be used for storing temporary variables or other intermediate information during execution of instructions to be executed by processor 504. Such instructions, when stored in non-transitory computer-readable storage media accessible to processor 504, can render computer system 500 into a special-purpose machine that is customized to perform the operations specified in the instructions.

Computer system 500 further includes non-volatile memory such as read only memory (ROM) 508 or other static storage device coupled to I/O subsystem 502 for storing information and instructions for processor 504. The ROM 508 may include various forms of programmable ROM (PROM) such as erasable PROM (EPROM) or electrically erasable PROM (EEPROM). A unit of persistent storage 510 may include various forms of non-volatile RAM (NVRAM), such as FLASH memory, or solid-state storage, magnetic disk or optical disk such as CD-ROM or DVD-ROM, and may be coupled to I/O subsystem 502 for storing information and instructions. Storage 510 is an example of a non-transitory computer-readable medium that may be used to store instructions and data which when executed by the processor 504 cause performing computer-implemented methods to execute the techniques herein.

The instructions in memory 506, ROM 508 or storage 510 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file processing instructions to interpret and render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. The instructions may implement a web server, web application server or web client. The instructions may be organized as a presentation layer, application layer and data storage layer such as a relational database system using structured query language (SQL) or NoSQL, an object store, a graph database, a flat file system or other data storage.

Computer system 500 may be coupled via I/O subsystem 502 to at least one output device 512. In one embodiment, output device 512 is a digital computer display. Examples of a display that may be used in various embodiments include a touch screen display or a light-emitting diode (LED) display or a liquid crystal display (LCD) or an e-paper display. Computer system 500 may include other type(s) of output devices 512, alternatively or in addition to a display device. Examples of other output devices 512 include printers, ticket printers, plotters, projectors, sound cards or video cards, speakers, buzzers or piezoelectric devices or other audible devices, lamps or LED or LCD indicators, haptic devices, actuators or servos.

At least one input device 514 is coupled to I/O subsystem 502 for communicating signals, data, command selections or gestures to processor 504. Examples of input devices 514 include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device 516, which may perform cursor control or other automated control functions such as navigation in a graphical interface on a display screen, alternatively or in addition to input functions. Control device 516 may be a touchpad, a mouse, a trackball, or cursor direction keys for communicating direction information and command selections to processor 504 and for controlling cursor movement on display 512. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism or other type of control device. An input device 514 may include a combination of multiple different input devices, such as a video camera and a depth sensor.

In another embodiment, computer system 500 may comprise an internet of things (IoT) device in which one or more of the output device 512, input device 514, and control device 516 are omitted. Or, in such an embodiment, the input device 514 may comprise one or more cameras, motion detectors, thermometers, microphones, seismic detectors, other sensors or detectors, measurement devices or encoders and the output device 512 may comprise a special-purpose display such as a single-line LED or LCD display, one or more indicators, a display panel, a meter, a valve, a solenoid, an actuator or a servo.

When computer system 500 is a mobile computing device, input device 514 may comprise a global positioning system (GPS) receiver coupled to a GPS module that is capable of triangulating to a plurality of GPS satellites, determining and generating geo-location or position data such as latitude-longitude values for a geophysical location of the computer system 500. Output device 512 may include hardware, software, firmware and interfaces for generating position reporting packets, notifications, pulse or heartbeat signals, or other recurring data transmissions that specify a position of the computer system 500, alone or in combination with other application-specific data, directed toward host 524 or server 530.

Computer system 500 may implement the techniques described herein using customized hard-wired logic, at least one ASIC or FPGA, firmware and/or program instructions or logic which when loaded and used or executed in combination with the computer system causes or programs the computer system to operate as a special-purpose machine. According to one embodiment, the techniques herein are performed by computer system 500 in response to processor 504 executing at least one sequence of at least one instruction contained in main memory 506. Such instructions may be read into main memory 506 from another storage medium, such as storage 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage 510. Volatile media includes dynamic memory, such as memory 506. Common forms of storage media include, for example, a hard disk, solid state drive, flash drive, magnetic data storage medium, any optical or physical data storage medium, memory chip, or the like.

Storage media is distinct from but may be used in conjunction with transmission media. Transmission media participates in transferring information between storage media. For example, transmission media includes coaxial cables, copper wire and fiber optics, including the wires that comprise a bus of I/O subsystem 502. Transmission media can also take the form of acoustic or light waves, such as those generated during radio-wave and infra-red data communications.

Various forms of media may be involved in carrying at least one sequence of at least one instruction to processor 504 for execution. For example, the instructions may initially be carried on a magnetic disk or solid-state drive of a remote computer. The remote computer can load the instructions into its dynamic memory and send the instructions over a communication link such as a fiber optic or coaxial cable or telephone line using a modem. A modem or router local to computer system 500 can receive the data on the communication link and convert the data to be read by computer system 500. For instance, a receiver such as a radio frequency antenna or an infrared detector can receive the data carried in a wireless or optical signal and appropriate circuitry can provide the data to I/O subsystem 502 such as place the data on a bus. I/O subsystem 502 carries the data to memory 506, from which processor 504 retrieves and executes the instructions. The instructions received by memory 506 may optionally be stored on storage 510 either before or after execution by processor 504.

Computer system 500 also includes a communication interface 518 coupled to bus 502. Communication interface 518 provides a two-way data communication coupling to network link(s) 520 that are directly or indirectly connected to at least one communication networks, such as a network 522 or a public or private cloud on the Internet. For example, communication interface 518 may be an Ethernet networking interface, integrated-services digital network (ISDN) card, cable modem, satellite modem, or a modem to provide a data communication connection to a corresponding type of communications line, for example an Ethernet cable or a metal cable of any kind or a fiber-optic line or a telephone line. Network 522 broadly represents a local area network (LAN), wide-area network (WAN), campus network, internetwork or any combination thereof. Communication interface 518 may comprise a LAN card to provide a data communication connection to a compatible LAN, or a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 518 sends and receives electrical, electromagnetic or optical signals over signal paths that carry digital data streams representing various types of information.

Network link 520 typically provides electrical, electromagnetic, or optical data communication directly or through at least one network to other data devices, using, for example, satellite, cellular, Wi-Fi, or BLUETOOTH technology. For example, network link 520 may provide a connection through a network 522 to a host computer 524.

Furthermore, network link 520 may provide a connection through network 522 or to other computing devices via internetworking devices and/or computers that are operated by an Internet Service Provider (ISP) 526. ISP 526 provides data communication services through a world-wide packet data communication network represented as internet 528. A server computer 530 may be coupled to internet 528. Server 530 broadly represents any computer, data center, virtual machine or virtual computing instance with or without a hypervisor, or computer executing a containerized program system such as DOCKER or KUBERNETES. Server 530 may represent an electronic digital service that is implemented using more than one computer or instance and that is accessed and used by transmitting web services requests, uniform resource locator (URL) strings with parameters in HTTP payloads, application programming interface (API) calls, app services calls, or other service calls. Computer system 500 and server 530 may form elements of a distributed computing system that includes other computers, a processing cluster, server farm or other organization of computers that cooperate to perform tasks or execute applications or services. Server 530 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to interpret or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. Server 530 may comprise a web application server that hosts a presentation layer, application layer and data storage layer such as a relational database system using structured query language (SQL) or NoSQL, an object store, a graph database, a flat file system or other data storage.

Computer system 500 can send messages and receive data and instructions, including program code, through the network(s), network link 520 and communication interface 518. In the Internet example, a server 530 might transmit a requested code for an application program through Internet 528, ISP 526, local network 522 and communication interface 518. The received code may be executed by processor 504 as it is received, and/or stored in storage 510, or other non-volatile storage for later execution.

The execution of instructions as described in this section may implement a process in the form of an instance of a computer program that is being executed, and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 504. While each processor 504 or core of the processor executes a single task at a time, computer system 500 may be programmed to implement multitasking to allow each processor to switch between tasks that are being executed without having to wait for each task to finish. In an embodiment, switches may be performed when tasks perform input/output operations, when a task indicates that it can be switched, or on hardware interrupts. Time-sharing may be implemented to allow fast response for interactive user applications by rapidly performing context switches to provide the appearance of concurrent execution of multiple processes simultaneously. In an embodiment, for security and reliability, an operating system may prevent direct communication between independent processes, providing strictly mediated and controlled inter-process communication functionality.

### 7. EXTENSIONS AND ALTERNATIVES

In the foregoing specification, embodiments of the disclosure have been described with reference to numerous specific details that may vary from implementation to implementation. The specification and drawings are, accordingly, to be regarded in an illustrative rather than a restrictive sense. The sole and exclusive indicator of the scope of the disclosure is defined by the appended claims.

## Claims

1. A computer-implemented method of restoring clean speech from coded audio data, comprising:
obtaining coded audio data comprising a first set of frames;
extracting a set of feature vectors from the coded audio data using a self-supervised deep learning model including a neural network, the set of feature vectors being respectively extracted from the first set of frames; and
generating enhanced speech data comprising a second set of frames from the set of feature vectors using a generative deep learning model including a neural network, the enhanced speech data corresponding to clean speech in the coded audio data;
the self-supervised deep learning model including an encoder and a plurality of workers,
each worker of the plurality of workers performing a self-supervised task related to a distinct speech property, and
a worker of the plurality of workers performing the self-supervised task related to a pre-defined sampling strategy that draws anchor, positive, and negative samples from a pool of representations generated by the encoder.

2. The computer-implemented method of claim 1, further comprising
receiving original coded data,
the obtaining comprising down-sampling the original coded data.

3. The computer-implemented method of claim 2,
wherein the original coded data corresponds to a sampling rate of 48 kHz, and
wherein the coded audio data corresponds to a sampling rate of 16 kHz.

4. The computer-implemented method of any of claims 1-3, the coded audio data containing noise or reverbs.

5. The computer-implemented method of any of claims 1-4,
the generative deep learning model including a conditional network and a recurrent network,
the conditional network converting the set of feature vectors into a set of output feature vectors by considering multiple frames each time, and
the recurrent network generating the enhanced speech data from the set of output feature vectors one sample at a time, wherein each frame of the second set of frames comprises a plurality of samples.

6. The computer-implemented method of any of claims 1-5, further comprising:
obtaining a training set of distorted speech signals of a specific sampling rate lower than a predetermined sampling rate; and
building the self-supervised deep learning model using the training set of distorted speech signals.

7. The computer-implemented method of any of claims 1-6, further comprising:
obtaining a dataset of down-sampled speech signals relative to a predetermined sampling rate;
generating a training set of sets of feature vectors from the dataset using the self-supervised deep learning model; and
building the generative deep learning model using the training set of sets of feature vectors.

8. The computer-implemented method of any of claims 1-7, further comprising:
obtaining a dataset of distorted speech signals of a specific sampling rate lower than a predetermined sampling rate; and
training a combined model comprising the self-supervised deep learning model connected with the generative deep learning model using the dataset.

9. A system for restoring clean speech from coded audio data, comprising:
a memory; and
one or more processors coupled to the memory and configured to perform any of the computer-implemented methods of claims 1-8.

10. A computer-readable, non-transitory storage medium storing computer-executable instructions, which when executed implement a method of restoring clean speech from coded audio data, the method comprising:
obtaining a dataset of coded, down-sampled speech signals relative to a predetermined sampling rate;
generating a training set of sets of feature vectors from the dataset using a self-supervised deep learning model;
building a generative deep learning model using the training set of sets of feature vectors;
extracting a set of feature vectors from coded audio data using the self-supervised deep learning model; and
generating enhanced speech data from the set of feature vectors using the generative deep learning model;
the self-supervised deep learning model including an encoder and a plurality of workers,
each worker of the plurality of workers performing a self-supervised task related to a distinct speech property, and
a worker of the plurality of workers performing the self-supervised task related to a pre-defined sampling strategy that draws anchor, positive, and negative samples from a pool of representations generated by the encoder.

11. The computer-readable, non-transitory storage medium of claim 10, the method further comprising:
obtaining a first training set of coded speech signals of a specific sampling rate lower than the predetermined sampling rate; and
creating the self-supervised deep learning model from the first training set; the method optionally further comprising:
obtaining a second dataset of clean speech signals of the specific sampling rate corresponding to the coded speech signals; and
obtaining the first training set comprising distorting a copy of the second dataset with one or more artifacts caused by a recording environment, a recording equipment, or a coding algorithm,
the creating being performed further using the second dataset.

12. The computer-readable, non-transitory storage medium of any of claims 10-11, the method further comprising
receiving original coded data of the predetermined sampling rate, and
the extracting comprising down-sampling the original coded data.

13. The computer-readable, non-transitory storage medium of any of claims 10-12, wherein:
the dataset of coded, down-sampled speech signals contains noise or reverbs, and the coded audio data also containing noise or reverbs; and/or
wherein the coded audio data comprises a first set of frames, the set of feature vectors is respectively extracted from the first set of frames, and the enhanced speech data comprising a second set of frames.

14. The computer-readable, non-transitory storage medium of claim 13,
the generative deep learning model including a conditional network and a recurrent network,
the conditional network converting a set of feature vectors of the sets of feature vectors into a set of output feature vectors by considering multiple frames each time, and
the recurrent network generating the enhanced speech data from the set of output feature vectors one sample at a time, wherein each frame of the second set of frames comprises a plurality of samples; wherein optionally:
the recurrent network generates a new sample of each frame the enhanced speech data using a corresponding feature vector of the set of feature vectors and samples of the enhanced speech data generated previously.

15. The computer-readable, non-transitory storage medium of any of claims 10-14, the method further comprising
obtaining a second dataset of clean speech signals of the predetermined sampling rate corresponding to the coded, down-sampled speech signals,
the building being performed further using the second dataset.

## Patentansprüche

1. Computerimplementiertes Verfahren zum Wiederherstellen sauberer Sprache aus codierten Audiodaten, umfassend:
Erhalten codierter Audiodaten, die einen ersten Satz von Frames umfassen;
Extrahieren eines Satzes von Merkmalsvektoren aus den codierten Audiodaten unter Verwendung eines selbstüberwachten Deep-Learning-Modells, das ein neuronales Netz einschließt, wobei der Satz von Merkmalsvektoren jeweils aus dem ersten Satz von Frames extrahiert wird; und
Erzeugen verbesserter Sprachdaten, die einen zweiten Satz von Frames aus dem Satz von Merkmalsvektoren umfassen, unter Verwendung eines generativen Deep-Learning-Modells, das ein neuronales Netz einschließt, wobei die verbesserten Sprachdaten sauberer Sprache in den codierten Audiodaten entsprechen;
wobei das selbstüberwachte Deep-Learning-Modell einen Encoder und eine Vielzahl von Arbeitern einschließt,
jeder Arbeiter der Vielzahl von Arbeitern eine selbstüberwachte Aufgabe im Zusammenhang mit einer bestimmten Spracheigenschaft durchführt, und
ein Arbeiter der Vielzahl von Arbeitern die selbstüberwachte Aufgabe im Zusammenhang mit einer vordefinierten Abtaststrategie durchführt, die Anker-, positive und negative Abtastwerte aus einem vom Encoder erzeugten Pool von Darstellungen zieht.

2. Computerimplementiertes Verfahren nach Anspruch 1, weiter umfassend
Empfangen ursprünglicher codierter Daten,
wobei das Erhalten Downsampling der ursprünglichen codierten Daten umfasst.

3. Computerimplementiertes Verfahren nach Anspruch 2,
wobei die ursprünglichen codierten Daten einer Abtastrate von 48 kHz entsprechen, und
wobei die codierten Audiodaten einer Abtastrate von 16 kHz entsprechen.

4. Computerimplementiertes Verfahren nach einem der Ansprüche 1-3, wobei die codierten Audiodaten Rauschen oder Nachhall enthalten.

5. Computerimplementiertes Verfahren nach einem der Ansprüche 1-4,
wobei das generative Deep-Learning-Modell ein bedingtes Netz und eines rekurrentes Netz einschließt,
das bedingte Netz den Satz von Merkmalsvektoren in einen Satz von Ausgabemerkmalsvektoren umwandelt, indem es jedes Mal mehrere Frames berücksichtigt, und
das rekurrente Netz die verbesserten Sprachdaten aus dem Satz von Ausgabemerkmalsvektoren Abtastwert für Abtastwert erzeugt, wobei jeder Frame des zweiten Satzes von Frames eine Vielzahl von Abtastwerten umfasst.

6. Computerimplementiertes Verfahren nach einem der Ansprüche 1-5, weiter umfassend:
Erhalten eines Trainingssatzes verzerrter Sprachsignale mit einer bestimmten Abtastrate, die niedriger als eine vorgegebene Abtastrate ist; und
Erstellen des selbstüberwachten Deep-Learning-Modells unter Verwendung des Trainingssatzes verzerrter Sprachsignale.

7. Computerimplementiertes Verfahren nach einem der Ansprüche 1-6, weiter umfassend:
Erhalten eines Datensatzes heruntergesampelter Sprachsignale im Verhältnis zu einer vorgegebenen Abtastrate;
Erzeugen eines Trainingssatzes von Merkmalsvektoren aus dem Datensatz unter Verwendung des selbstüberwachten Deep-Learning-Modells; und
Erstellen des generativen Deep-Learning-Modells unter Verwendung des Trainingssatzes von Merkmalsvektorsätzen.

8. Computerimplementiertes Verfahren nach einem der Ansprüche 1-7, weiter umfassend:
Erhalten eines Datensatzes verzerrter Sprachsignale mit einer bestimmten Abtastrate, die niedriger als eine vorgegebene Abtastrate ist; und
Trainieren eines kombinierten Modells, das das selbstüberwachte Deep-Learning-Modell in Verbindung mit dem generativen Deep-Learning-Modell umfasst, unter Verwendung des Datensatzes.

9. System zum Wiederherstellen sauberer Sprache aus codierten Audiodaten, umfassend:
einen Speicher; und
einen oder mehrere Prozessoren, die mit dem Speicher gekoppelt und dazu konfiguriert sind, alle der computerimplementierten Verfahren nach den Ansprüchen 1-8 durchzuführen.

10. Computerlesbares, nichtflüchtiges Speichermedium, das computerausführbare Anweisungen speichert, die, wenn sie ausgeführt werden, ein Verfahren zum Wiederherstellen sauberer Sprache aus codierten Audiodaten implementieren, wobei das Verfahren Folgendes umfasst:
Erhalten eines Datensatzes codierter, heruntergesampelter Sprachsignale im Verhältnis zu einer vorgegebenen Abtastrate;
Erzeugen eines Trainingssatzes von Merkmalsvektoren aus dem Datensatz unter Verwendung eines selbstüberwachten Deep-Learning-Modells;
Erstellen eines generativen Deep-Learning-Modells unter Verwendung des Trainingssatzes von Merkmalsvektorsätzen.
Extrahieren eines Satzes von Merkmalsvektoren aus codierten Audiodaten unter Verwendung des selbstüberwachten Deep-Learning-Modells; und
Erzeugen verbesserter Sprachdaten aus dem Satz von Merkmalsvektoren unter Verwendung des generativen Deep-Learning-Modells;
wobei das selbstüberwachte Deep-Learning-Modell einen Encoder und eine Vielzahl von Arbeitern einschließt,
jeder Arbeiter der Vielzahl von Arbeitern eine selbstüberwachte Aufgabe im Zusammenhang mit einer bestimmten Spracheigenschaft durchführt, und
ein Arbeiter der Vielzahl von Arbeitern die selbstüberwachte Aufgabe im Zusammenhang mit einer vordefinierten Abtaststrategie durchführt, die Anker-, positive und negative Abtastwerte aus einem vom Encoder erzeugten Pool von Darstellungen zieht.

11. Computerlesbares nichttransitorisches Speichermedium nach Anspruch 10, wobei das Verfahren weiter Folgendes umfasst:
Erhalten eines ersten Trainingssatzes codierter Sprachsignale mit einer bestimmten Abtastrate, die niedriger als die vorgegebene Abtastrate ist; und
Generieren des selbstüberwachten Deep-Learning-Modells aus dem ersten Trainingssatz; wobei das Verfahren optional weiter Folgendes umfasst:
Erhalten eines zweiten Datensatzes sauberer Sprachsignale mit der spezifischen Abtastrate, die den codierten Sprachsignalen entspricht; und
Erhalten des ersten Trainingssatzes, umfassend Verzerren einer Kopie des zweiten Datensatzes mit einem oder mehreren Artefakten, die durch eine Aufnahmeumgebung, ein Aufnahmegerät oder einen Kodieralgorithmus verursacht werden,
wobei das Generieren weiter unter Verwendung des zweiten Datensatzes durchgeführt wird.

12. Computerlesbares nichttransitorisches Speichermedium nach einem der Ansprüche 10-11, das Verfahren weiter umfassend
Empfangen ursprünglicher codierter Daten mit der vorgegebenen Abtastrate, und
wobei das Extrahieren Downsampling der ursprünglichen codierten Daten umfasst.

13. Computerlesbares nichttransitorisches Speichermedium nach einem der Ansprüche 10-12, wobei:
der Datensatz codierter, heruntergesampelter Sprachsignale Rauschen oder Nachhall enthält und die codierten Audiodaten auch Rauschen oder Nachhall enthalten; und/oder
wobei die codierten Audiodaten einen ersten Satz von Frames umfassen, der Satz von Merkmalsvektoren jeweils aus dem ersten Satz von Frames extrahiert wird und die verbesserten Sprachdaten einen zweiten Satz von Frames umfassen.

14. Computerlesbares nichttransitorisches Speichermedium nach Anspruch 13,
wobei das generative Deep-Learning-Modell ein bedingtes Netz und eines rekurrentes Netz einschließt,
das bedingte Netz einen Satz von Merkmalsvektoren des Satzes von Merkmalsvektoren in einen Satz von Ausgabemerkmalsvektoren umwandelt, indem es jedes Mal mehrere Frames berücksichtigt, und
das rekurrente Netz die verbesserten Sprachdaten aus dem Satz von Ausgabemerkmalsvektoren Abtastwert für Abtastwert erzeugt, wobei jeder Frame des zweiten Satzes von Frames eine Vielzahl von Abtastwerten umfasst; wobei optional:
das rekurrente Netz aus jedem Frame der verbesserten Sprachdaten einen neuen Abtastwert unter Verwendung eines entsprechenden Merkmalsvektors aus dem Satz von Merkmalsvektoren und Abtastwerten der zuvor erzeugten verbesserten Sprachdaten erzeugt.

15. Computerlesbares nichttransitorisches Speichermedium nach einem der Ansprüche 10-14, das Verfahren weiter umfassend
Erhalten eines zweiten Datensatzes sauberer Sprachsignale mit der vorgegebenen Abtastrate, die den codierten, heruntergesampelten Sprachsignalen entspricht,
wobei das Erstellen weiter unter Verwendung des zweiten Datensatzes durchgeführt wird.

## Revendications

1. Procédé mis en œuvre par ordinateur pour restaurer une parole propre à partir de données audio codées, comprenant :
l'obtention des données audio codées comprenant un premier ensemble de trames ;
l'extraction d'un ensemble de vecteurs de caractéristique à partir des données audio codées en utilisant un modèle d'apprentissage profond auto-supervisé incluant un réseau neuronal, l'ensemble de vecteurs de caractéristique étant respectivement extrait du premier ensemble de trames ; et
la génération des données de parole améliorées comprenant un second ensemble de trames à partir de l'ensemble de vecteurs de caractéristique en utilisant un modèle d'apprentissage profond génératif incluant un réseau neuronal, les données de parole améliorées correspondant à une parole propre dans les données audio codées ;
le modèle d'apprentissage profond auto-supervisé incluant un encodeur et une pluralité de travailleurs,
chaque travailleur de la pluralité de travailleurs réalisant une tâche auto-supervisée liée à une propriété de parole distincte, et
un travailleur de la pluralité de travailleurs réalisant la tâche auto-supervisée liée à une stratégie d'échantillonnage prédéfinie qui extrait des échantillons d'ancrage, positifs et négatifs d'un bassin de représentations générées par l'encodeur.

2. Procédé mis en œuvre par ordinateur selon la revendication 1 comprenant en outre :
la réception des données codées originales,
l'obtention comprenant le sous-échantillonnage des données codées originales.

3. Procédé mis en œuvre par ordinateur selon la revendication 2,
dans lequel les données codées originales correspondent à un taux d'échantillonnage de 48 kHz, et
dans lequel les données audio codées correspondent à un taux d'échantillonnage de 16 kHz.

4. Procédé mis en œuvre par ordinateur selon l'une quelconque des revendications 1-3, les données audio codées contenant du bruit ou des réverbérations.

5. Procédé mis en œuvre par ordinateur selon l'une quelconque des revendications 1-4,
le modèle d'apprentissage profond génératif incluant un réseau conditionnel et un réseau récurrent,
le réseau conditionnel convertissant l'ensemble de vecteurs de caractéristique en un ensemble de vecteurs de caractéristique de sortie en considérant de multiples trames à chaque fois, et
le réseau récurrent générant les données de parole améliorées à partir de l'ensemble de vecteurs de caractéristique de sortie un échantillon à la fois, dans lequel chaque trame du second ensemble de trames comprend une pluralité d'échantillons.

6. Procédé mis en œuvre par ordinateur selon l'une quelconque des revendications 1-5, comprenant en outre :
l'obtention d'un ensemble d'entraînement de signaux de parole déformés d'un taux d'échantillonnage spécifique inférieur à un taux d'échantillonnage prédéterminé ; et
la construction du modèle d'apprentissage profond auto-supervisé en utilisant l'ensemble d'entraînement de signaux de parole déformés.

7. Procédé mis en œuvre par ordinateur selon l'une quelconque des revendications 1-6, comprenant en outre :
l'obtention d'un ensemble de données de signaux de parole sous-échantillonnés par rapport à un taux d'échantillonnage prédéterminé ;
la génération d'un ensemble d'entraînement d'ensembles de vecteurs de caractéristique à partir de l'ensemble de données en utilisant le modèle d'apprentissage profond auto-supervisé ; et
la construction du modèle d'apprentissage profond génératif en utilisant l'ensemble d'entraînement d'ensembles de vecteurs de caractéristique.

8. Procédé mis en œuvre par ordinateur selon l'une quelconque des revendications 1-7, comprenant en outre :
l'obtention d'un ensemble de données de signaux de parole déformés d'un taux d'échantillonnage spécifique inférieur à un taux d'échantillonnage prédéterminé ; et
l'entraînement d'un modèle combiné comprenant le modèle d'apprentissage profond auto-supervisé connecté au modèle d'apprentissage profond génératif en utilisant l'ensemble de données.

9. Système de restauration de parole propre à partir de données audio codées, comprenant :
une mémoire ; et
un ou plusieurs processeurs couplés à la mémoire et configurés pour mettre en œuvre l'un quelconque des procédés mis en œuvre par ordinateur des revendications 1-8.

10. Support de stockage non transitoire lisible par ordinateur stockant des instructions exécutables par ordinateur qui, lorsqu'elles sont exécutées, mettent en œuvre un procédé de restauration de parole propre à partir de données audio codées, le procédé comprenant :
l'obtention d'un ensemble de données de signaux de parole sous-échantillonnés codés par rapport à un taux d'échantillonnage prédéterminé ;
la génération d'un ensemble d'entraînement d'ensembles de vecteurs de caractéristique à partir de l'ensemble de données en utilisant un modèle d'apprentissage profond auto-supervisé ;
la construction d'un modèle d'apprentissage profond génératif en utilisant l'ensemble d'entraînement d'ensembles de vecteurs de caractéristique ;
l'extraction d'un ensemble de vecteurs de caractéristique à partir de données audio codées en utilisant le modèle d'apprentissage profond auto-supervisé ; et
la génération des données de parole améliorées à partir de l'ensemble de vecteurs de caractéristique en utilisant le modèle d'apprentissage profond génératif ;
le modèle d'apprentissage profond auto-supervisé incluant un encodeur et une pluralité de travailleurs,
chaque travailleur de la pluralité de travailleurs réalisant une tâche auto-supervisée liée à une propriété de parole distincte, et
un travailleur de la pluralité de travailleurs réalisant la tâche auto-supervisée liée à une stratégie d'échantillonnage prédéfinie qui extrait des échantillons d'ancrage, positifs et négatifs d'un bassin de représentations générées par l'encodeur.

11. Support de stockage non transitoire lisible par ordinateur selon la revendication 10, le procédé comprenant en outre :
l'obtention d'un premier ensemble d'entraînement de signaux de parole codés d'un taux d'échantillonnage spécifique inférieur au taux d'échantillonnage prédéterminé ; et
la création du modèle d'apprentissage profond auto-supervisé à partir du premier ensemble d'apprentissage ; le procédé comprenant facultativement en outre :
l'obtention d'un second ensemble de données de signaux de parole propre du taux d'échantillonnage spécifique correspondant aux signaux de parole codés ; et
l'obtention du premier ensemble d'apprentissage comprenant la distorsion d'une copie du second ensemble de données avec un ou plusieurs artefacts causés par un environnement d'enregistrement, un équipement d'enregistrement ou un algorithme de codage,
la création étant en outre mise en œuvre en utilisant le second ensemble de données.

12. Support de stockage non transitoire lisible par ordinateur selon l'une quelconque des revendications 10-11, le procédé comprenant en outre
la réception des données codées originales du taux d'échantillonnage prédéterminé, et
l'extraction comprenant le sous-échantillonnage des données codées originales.

13. Support de stockage non transitoire lisible par ordinateur selon l'une quelconque des revendications 10-12, dans lequel :
l'ensemble de données de signaux de parole codés sous-échantillonnés contient du bruit ou des réverbérations, et les données audio codées contiennent également du bruit ou des réverbérations ; et/ou
dans lequel les données audio codées comprennent un premier ensemble de trames, l'ensemble de vecteurs de caractéristique est respectivement extrait du premier ensemble de trames, et les données de parole améliorées comprennent un second ensemble de trames.

14. Support de stockage non transitoire lisible par ordinateur selon la revendication 13,
le modèle d'apprentissage profond génératif incluant un réseau conditionnel et un réseau récurrent,
le réseau conditionnel convertissant un ensemble de vecteurs de caractéristique des ensembles de vecteurs de caractéristique en un ensemble de vecteurs de caractéristique de sortie en considérant de multiples trames à chaque fois, et
le réseau récurrent générant les données de parole améliorées à partir de l'ensemble de vecteurs de caractéristique de sortie un échantillon à la fois, dans lequel chaque trame du second ensemble de trames comprend une pluralité d'échantillons ; dans lequel facultativement :
le réseau récurrent génère un nouvel échantillon de chaque trame des données de parole améliorées en utilisant un vecteur de caractéristique correspondant de l'ensemble de vecteurs de caractéristique et d'échantillons des données de parole améliorées générées précédemment.

15. Support de stockage non transitoire lisible par ordinateur selon l'une quelconque des revendications 10-14, le procédé comprenant en outre
l'obtention d'un second ensemble de données de signaux de parole propre du taux d'échantillonnage prédéterminé correspondant aux signaux de parole sous-échantillonnés codés,
la construction étant en outre mise en œuvre en utilisant le second ensemble de données.
